# EUROPEAN PATENT SPECIFICATION

(11) **EP 2 861 444 B1**
(45) Date of publication and mention of the grant of the patent: **11.01.2017**
(21) Application number: 12794968.3
(22) Date of filing: 30.11.2012
(51) Int. Cl.: B60K 7/00, B60G 1/00, B60G 3/18, B60G 7/00, B62D 5/04, B60G 17/00, B60G 17/015, B60G 17/016, B62D 6/04, B60G 17/08, B62D 17/00

(54) **VEHICLE SYSTEM FOR ACTIVE WHEEL ANGLE ADJUSTMENT**
FAHRZEUGSYSTEM ZUR AKTIVEN RADWINKELEINSTELLUNG
SYSTÈME DE VÉHICULE POUR UN RÉGLAGE D'ANGLE DE ROUE ACTIF

(30) Priority: 14.06.2012 EP 12171995
(43) Date of publication of application: 22.04.2015
(73) Proprietor: SKF B.V, 3439 MT Nieuwegein (NL)
(72) Inventor: DORRESTIJN, Igor, NL-3446DM Woerden (NL); PETERS, Gilbert, NL-6511 DX Nijmegen (NL); MEIJERING, Wietse, B-1850 Grimbergen (BE)
(74) Representative: Tweedlie, Diane Harkness
(86) International application number: PCT/EP2012/074119
(87) International publication number: WO 2013/185859

(56) References cited:
- EP-A1- 2 251 217
- EP-A1- 2 287 024
- EP-A2- 0 979 769
- WO-A1-00/38939
- WO-A1-92/00201
- WO-A2-03/054500
- US-A1- 2003 111 812
- US-A1- 2005 051 988

## Description

### FIELD OF THE INVENTION

The present invention relates to a vehicle system for actively adjusting an alignment angle of a vehicle wheel, particularly a rear wheel of the vehicle, using a hydraulic actuator.

### BACKGROUND TO THE INVENTION

Vehicle handling and manoeuvrability can be improved by tuning the toe angle and/or the camber angle of a vehicle wheel to the current driving conditions. For example, a toe-in position of the rear wheels results in better vehicle dynamics during braking, deceleration and acceleration. A toe-out position has benefits at relatively low vehicle speeds. During cornering, a negative camber angle improves grip. Furthermore, an optimized rear wheel alignment reduces tyre wear and has a positive impact on fuel economy, by minimizing the drag and slip on the rear tires.

An arrangement for active adjustment of toe angle and camber angle in a vehicle with a multi-link suspension is disclosed in US5292149. The arrangement includes a device with an adjusting element, whereby independently of the device, the suspension links are linked below and/or above a wheel rotation axis to a wheel carrier and are pivotally held on the vehicle body. The adjusting element is connected with the wheel carrier by means of a tie rod. The adjusting element comprises at least one hydraulic cylinder and is adjustable about a swivel axis formed below the rotation axis by a wheel-carrier-side tie rod joint and a wheel-carrier-side link joint.

The majority of vehicles, however, have a more straightforward twist-beam rear suspension. Several solutions for active toe angle adjustment using hydraulic actuators have been proposed for vehicles with this kind of suspension. For example, KR787654B1 discloses a system for a coupled torsion beam axle to change toe-out to toe-in, by varying the position of a wheel carrier mounted to a trailing arm of the torsion beam. The wheel carrier is mounted to the trailing arm via an upper arm and a pair of lower arms. The lower arms are connected to a pair of hydraulic cylinders, arranged in the trailing arm, which can move the lower arms in parallel, thereby changing the position of the wheel carrier, and the toe angle of a wheel mounted on the wheel carrier.

Further systems of the same typology are also known from US 2003/111812 A1 or from EP 0 979 769 A2. There is still room for improvement.

### SUMMARY OF THE INVENTION

Typically, the hydraulic actuators used in wheel angle adjustment devices are powered and controlled by a hydraulic unit dedicated to this purpose. Needless to say, the dedicated hydraulic unit adds to the weight of the vehicle, which counteracts the fuel-economy benefits of optimal wheel alignment. The dedicated unit also adds to overall cost and complexity of the system.

Consequently, it is an object of the present invention to define a vehicle system, which enables hydraulic adjustment of wheel alignment angle according to a straightforward and economical solution that keeps weight to a minimum.

This object is achieved by means of a vehicle system comprising a hydraulic actuator for actively adjusting an alignment angle of the wheel, in which the hydraulic actuator receives hydraulic pressure from an onboard system already present in the vehicle. Namely: the hydraulic braking system.

Specifically, the invention resides in a vehicle system comprising an antilock braking system (ABS) having a first hydraulic actuator for braking a wheel of the vehicle, and an ABS unit with a pump, an electronic controller and a brake circuit for delivering hydraulic pressure to the first hydraulic actuator. The vehicle system further comprises a second hydraulic actuator for acting on a moveable wheel carrier, to which the vehicle wheel is mounted, so as to actively adjust an alignment angle of the vehicle wheel. According to the invention, the second hydraulic actuator is connected to the brake circuit and the ABS unit is configured to deliver hydraulic pressure also to the second hydraulic actuator.

Suitably, the first hydraulic actuator is a brake mechanism such as a brake calliper and the second hydraulic actuator is a hydraulic cylinder that is adjustable in length.

The vehicle system further comprises valve means, in addition to the valves which are necessarily present in the brake circuit of the ABS unit. The additional valve means enable hydraulic pressure to be selectively delivered to one of the first and second hydraulic actuators. In some examples, the valve means are further configured to enable hydraulic pressure to be delivered simultaneously to both of the first and second hydraulic actuators. The advantage of simultaneous pressure delivery is that wheel alignment angle can always be adjusted during a braking operation.

In one embodiment, the first and second hydraulic actuators are connected to the brake circuit of the ABS unit via a single hydraulic line. The single hydraulic line from the ABS unit suitably comprises a first branch in connection with the first hydraulic actuator and comprises a second branch in connection with the second hydraulic actuator. The advantage of this embodiment is that the hardware of a standard ABS unit can be used. The only modification to the ABS unit that is required is to program the electronic controller to deliver hydraulic pressure to the second hydraulic actuator in response to one or more input signals.

When a single hydraulic line from the ABS is used, the additional valve means comprises at least a first valve arranged between the first hydraulic actuator and the single hydraulic line. Suitably, the first valve is a normally open valve, so that in the event of a power failure, hydraulic pressure can always be delivered to the brake. Preferably, the additional valve means further comprises a second valve arranged between the second hydraulic actuator and the single hydraulic line. Suitably, the second valve is a normally closed valve, so that in the event of a power failure, the supply of hydraulic pressure to the first hydraulic actuator (brake actuator) is guaranteed. The functionality of the first and second valves can also be performed by a single valve, such as two-position three-way valve.

In an alternative embodiment, the first hydraulic actuator is connected to the brake circuit of the ABS unit via a first hydraulic line and the second hydraulic actuator is connected to the brake circuit via a second hydraulic line. This embodiment requires a minor modification of a standard ABS unit. Besides the provision of a second hydraulic line from the ABS unit to the vehicle wheel, the ABS unit suitably comprises an additional valve arranged between the second hydraulic line and the pump. As explained above, this additional valve is preferably a normally-closed valve.

The wheel alignment angle referred to above may be a toe angle or a camber angle of the vehicle wheel. When the system of the invention is implemented on a vehicle with a twist beam rear suspension, the system is preferably used for toe angle adjustment of each rear wheel. Suitably, the wheel carrier to which the rear wheel is mounted is pivotable about a vertical axis. As a default position, the wheel carrier may have an alignment angle that corresponds to a toe-in setting of the vehicle wheel, or a toe-out setting. In some examples, the vehicle system of the invention enables the vehicle wheel to be set to one of two positions. One position is the default position, e.g. a maximum toe-in angle of approximately 1.0 degrees. The other position is then a maximum toe-out angle of approximately 1.0 degrees.

In other examples, the system of the invention is configured to enable a metred delivery of hydraulic pressure to the second hydraulic actuator. For example, the second branch of a single hydraulic line from the ABS unit or the second hydraulic line from the ABS unit may comprise a flow restriction. The toe angle of the vehicle wheel may then be set to intermediate positions between the maximum and minimum toe angles.

The second hydraulic actuator (toe actuator) is preferably arranged as close as possible to the first hydraulic actuator (brake actuator). Suitably, the first hydraulic actuator is a brake calliper and the second hydraulic actuator may be mounted to the brake actuator. In a preferred example, the second hydraulic actuator and the necessary valve means are integrated in the brake calliper, for optimum compactness.

If the wheel carrier is movable in a manner that enables adjustment of both toe angle and camber angle, the system according to the invention may comprise a third hydraulic actuator connected to the brake circuit of the ABS unit. The second hydraulic actuator is used for adjustment of e.g. toe angle and the third hydraulic actuator is used for the adjustment of camber angle. The vehicle system then comprises valve means, such that the ABS unit is able to selectively deliver hydraulic pressure to each of the first, second and third hydraulic actuators. In one example, the valve means and ABS unit are configured to enable hydraulic pressure to be simultaneously delivered to each of the first, second and third hydraulic actuators. In a further example, the valve means and ABS unit are configured to enable simultaneously delivery of hydraulic pressure to the first hydraulic actuator and to one of the second and third hydraulic actuators.

When the system of the invention is implemented on a vehicle with a multilink suspension, adjustment of toe angle and camber angle is possible. The vehicle wheel is mounted to a knuckle, which is connected to the vehicle chassis via a top link, a bottom link and a toe link. For the adjustment of toe angle, the toe link is connected to the knuckle via the second hydraulic actuator. Actuation of the second hydraulic actuator changes the effective length of the toe link which, in turn, adjusts toe angle. The second hydraulic actuator may be mounted to the chassis or may be mounted to or integrated in the knuckle. Alternatively, the second hydraulic actuator may be integrated in the toe link. In a similar manner, the top link of the multilink suspension is connected to the knuckle via the third hydraulic actuator, to change the effective length of the top link which, in turn, adjusts wheel camber angle.

A number of different control strategies may be employed for adjustment of toe angle and/or camber angle. In one example of a system that is adapted for toe angle adjustment, toe angle is adjusted based on a measurement of vehicle speed.

In a preferred embodiment of a system according to the invention, the ABS unit is equipped with Electronic Stability Control (ESC) functionality. The ABS unit is then configured to receive the following measured vehicle parameters: steering wheel angle; yaw rate; wheel speed and vehicle acceleration. Suitably, the ABS unit is programmed to determine the desired wheel alignment angle (toe angle and/or camber angle) based on or more of these parameters, enabling a larger number of possible control strategies to be implemented.

Preferably, the ABS unit is further adapted to receive a wheel alignment signal, from sensing means provided at the vehicle wheel for detecting the wheel alignment angle. The wheel alignment angle may be a toe angle or a camber angle. The desired alignment angle, calculated by the ABS unit, is then compared with the detected alignment angle. In the event of a difference, the controller of the ABS unit is configured to deliver hydraulic pressure to, or relive hydraulic pressure from, the second hydraulic actuator, as appropriate. When the system is adapted for toe angle and camber angle adjustment, the ABS unit is adapted to receive a toe angle signal and a camber angle signal from respective sensing means at the wheel for detecting toe angle and camber angle, and to determine a desired toe angle and a desired camber angle from the one or more measured vehicle parameters. Correspondingly, the controller is configured to change the hydraulic pressure being delivered to the second and third actuators when there is a difference between the detected toe and camber angles and the desired toe and camber angles.

The use of sensors at the wheel end to detect alignment angle is not necessary in systems where the wheel carrier can be set to only two positions, i.e. when actuation of the appropriate actuator causes the carrier to move from a default position to an adjusted position. For example, when the second hydraulic actuator actively adjusts toe angle, the current toe angle can be assumed to correspond to the position of the normally closed valve that controls whether or not hydraulic pressure is delivered to the second hydraulic actuator. If this valve is in a closed position, then the current toe angle is the default toe angle; if the valve is in an open position, the current toe angle is the adjusted angle.

The present invention also defines an ABS unit that is adapted for use in a vehicle system according to the invention.

Thus, a vehicle system according to the invention provides a compact and economical means of both braking a vehicle wheel and changing its alignment, which can be readily adapted to the design of the vehicle on which the system is implemented. Other advantages will become apparent from the detailed description and accompanying figures.

### DESCRIPTION OF THE FIGURES

- Figure 1:: shows a schematic representation of a vehicle equipped with an example of a vehicle system according to the invention;
- Figure 2:: shows a hydraulic diagram of a second example of a vehicle system according to the invention;
- Figure 3:: shows a hydraulic diagram of a third example of a vehicle system according to the invention;
- Figure 4:: shows a perspective view of a toe angle adjustment device for use on a vehicle with a twist beam rear suspension, the vehicle being equipped with a system according to the invention;
- Figure 5:: shows a top view of an example of a multilink suspension of a vehicle wheel, adapted for use in a system according to the invention that enables active toe angle and camber angle adjustment;
- Figure 6:: shows a top view of a further example of a multilink suspension that is adapted for camber and toe angle adjustment according to the invention.

### DETAILED DESCRIPTION

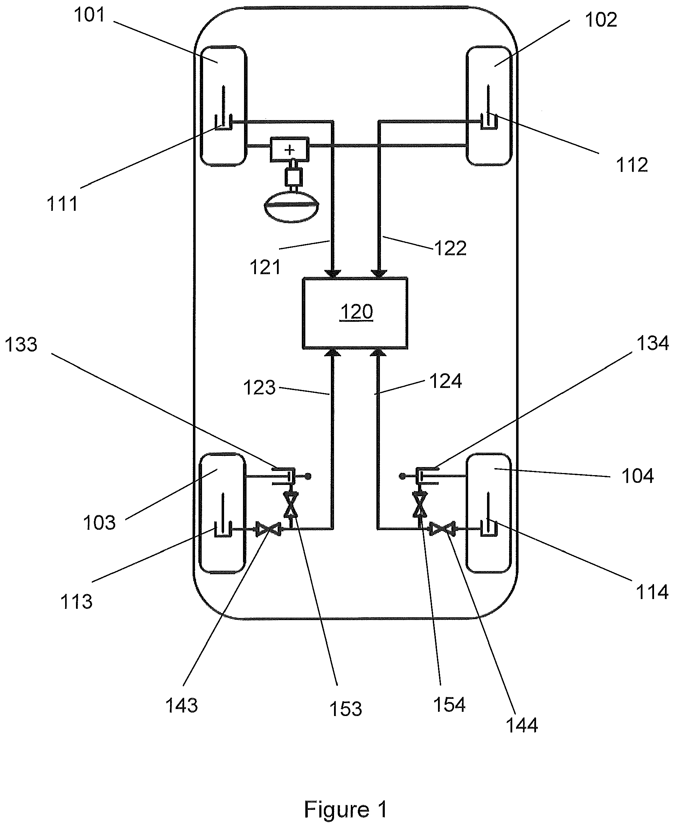

A vehicle equipped with an example of a system according to the invention is schematically depicted in Figure 1. The system comprises an antilock braking system (ABS) with an ABS unit 120. A brake mechanism is mounted at each wheel 101, 102, 103, 104 and each brake mechanism comprises a dedicated hydraulic actuator 111, 112, 113, 114, which receives hydraulic pressure from the ABS unit 120 via a corresponding hydraulic line 121, 122, 123, 124. The hydraulic actuators 111, 112, 113, 114 will be referred to as brake actuators.

The rear wheels 103, 104 of the vehicle in this example are rotatable about a vertical axis, and a further hydraulic actuator 133, 134 is respectively provided at the left 103 and right 104 rear wheels. Actuation of the further hydraulic actuator 133, 134 respectively causes the left and right wheels to rotate about the vertical axis, to thereby change the toe angle of these wheels. The further actuators 133, 134 will therefore be referred to as toe actuators. The toe actuators are executed as hydraulic cylinders. According to the invention, the system as a whole is configured such that the ABS unit 120 also delivers hydraulic pressure to the toe actuators 133, 134.

In this example, the toe actuator 133 for the rear left wheel 103 receives hydraulic pressure via the same hydraulic line 123 that supplies the corresponding brake actuator 113. Similarly, the toe actuator 134 for the rear left wheel 104 receives hydraulic pressure via the same hydraulic line 124 that supplies the corresponding brake actuator 114. For controlling the supply of hydraulic pressure to the actuators, a first valve 143, 144 is provided between each brake actuator 113, 114 and the corresponding hydraulic line 123, 124 from the ABS unit 120, and a second valve 153, 154 is provided between each toe actuator 133, 134 and the corresponding hydraulic line 123, 124. It is therefore possible to actuate the toe actuator and the brake actuator at the same time. Suitably, the first valve 143, 144 for the brake actuator 113, 114 is a normally open valve and the second valve 153, 154 for the toe actuator is a normally closed valve, so that in the event of a power failure, hydraulic pressure is always available for the brake actuators 113, 114.

The advantage of using the same hydraulic line to hydraulically power the toe actuator and the brake actuator at a particular rear wheel is that a standard ABS unit may be employed. To implement the invention, the only modification required is to program an electronic controller of the ABS unit to operate the second valve for the toe actuator, to change the toe angle, in response to one or more measured parameters.

In one example of a control strategy for active adjustment of toe angle, the desired rear wheel position is determined on the basis of vehicle speed alone. Suitably, the electronic controller of the ABS unit 120 is configured to receive a vehicle speed signal and operate the second valve for the toe actuator in dependence on this signal. For example, the default toe angle position may be a toe-out position, which is beneficial at slow vehicle speeds. When a certain threshold speed is reached, e.g. 70 km/hr, the system may be configured to open the second valves 153, 154, causing the toe actuators 133, 134 to change the rear wheels 103, 104 to a toe-in position, which gives better stability at higher speeds.

Different control strategies based on various input signals are possible. The control strategy for toe angle may also be made dependent on one or more of the following input signals: longitudinal acceleration, lateral acceleration, yaw rate and/or steering wheel angle. When the control strategy is based on further input signals, besides vehicle speed, the ABS unit 120 is preferably part of an Electronic Stability Control (ESC) system of the vehicle.

The ESC system improves vehicle stability by detecting and reducing loss of traction at the wheels. When the ECS system detects loss of steering control, it automatically applies the brakes to correct the direction of the vehicle to the direction desired by the driver. The brakes are automatically applied at the wheel where rotation speed needs to be reduced. ESC incorporates the ABS system, the Traction Control System (TCS) and directional stability assistance (yaw rate control). ABS is a system which prevents the wheels from locking under braking, and is the basis on which ESC was built. TCS senses wheel slip during acceleration and individually brakes the slipping wheel and/or reduces engine power until control is regained. The ECS system comprises: a steering wheel angle sensor, for determining the driver's desired direction; a speed sensor for each wheel 101, 102, 103, 104; and a yaw rate sensor with integrated acceleration sensor for determining the actual direction of the vehicle. Consequently, the ECS system measures the parameters which are necessary for determining the optimal toe angle of a vehicle wheel. Again, the system of the invention can be realised simply by programming the controller of the ABS unit 120 to operate the second valves 153, 154 in response to specific input signals.

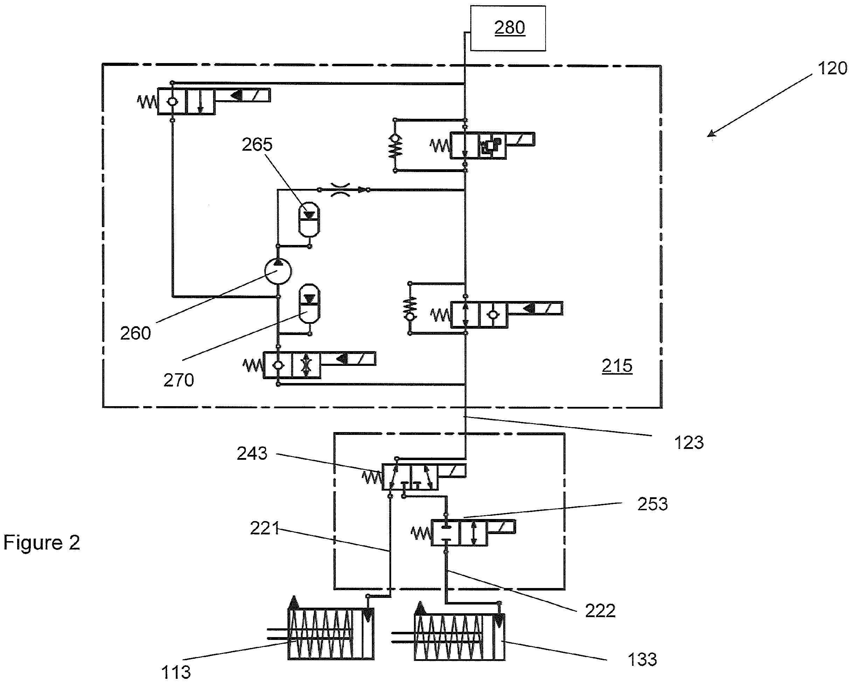

A more detailed representation of an ABS unit and a hydraulic circuit for a rear left vehicle wheel is shown Figure 2, which depicts a further example of a vehicle system according to the invention. In the figures, the same reference numerals will be used to denote components which are the same. The ABS unit 120 is a standard ABS unit, such as a Bosch ABS 3.5 unit with ESC functionality. The ABS unit 120 comprises a pump 260, a pressure accumulator, 265 and an accumulator damper 270 which are connected in a brake circuit 215 for delivering hydraulic pressure to, and, where necessary, removing hydraulic pressure from a brake actuator 113. The brake circuit 215 is connected to a master cylinder and master cylinder reservoir of brake fluid, schematically represented by reference numeral 280. The vehicle system further comprises a toe actuator 133 for changing the toe angle of the rear left wheel. In accordance with the invention, the toe actuator 133 is supplied with hydraulic pressure from the ABS unit 120.

Again, a single main hydraulic line 123 from the ABS unit delivers hydraulic pressure to the brake actuator 113 and to the toe actuator 133. In this example, a first valve 243 is arranged between the brake actuator and the main hydraulic line 123, and a second valve 253 is arranged between the toe actuator 133 and the first valve 243. The first valve 243 is a two-position, three-way hydraulic valve which is energized to make a selection between the brake actuator or the toe actuator. Suitably, the default selection (de-energized position) connects the brake actuator 113 with the main hydraulic line 123 from the ABS unit. The first valve 243 enables the main hydraulic line 123 to be split into a first branch 221 and a second branch 222. Hydraulic pressure is delivered to the brake actuator 113 via the first branch 221 and is delivered to the toe actuator 133 via the second branch 222. The second valve 253 is arranged in the second branch 222. The second valve 253 in this example is a two-way, normally closed hydraulic valve, which operates as a bidirectional blocking valve. This valve enables the system to be depressurized before switching from toe actuation to brake actuation.

Assuming that the default wheel position is a toe-out position and a toe-in position is required, the first and second valves 243, 253 are energized until the desired toe-in position is reached. The second valve is then closed (de-energized), maintaining the pressure on the toe actuator 133. Suitably, the pressure in the hydraulic line 123 is then released and the first valve 243 is de-energized, to enable brake actuation when needed. When a toe-in position is no longer required, the second valve 253 is opened (energized) and the pressure is released, resulting in toe-out.

In the example depicted in Figure 2, it is not possible to simultaneously build up pressure in both the toe actuator 133 and the brake actuator 113. Other valve configurations are possible, which do enable this. For example, the first valve 243 can be executed as a normally open two-way valve and the second valve can be executed as a normally closed two-way valve, arranged between the toe actuator 133 and the first valve 243. When both valves are open, the brake actuator and the toe actuator can be pressurized simultaneously.

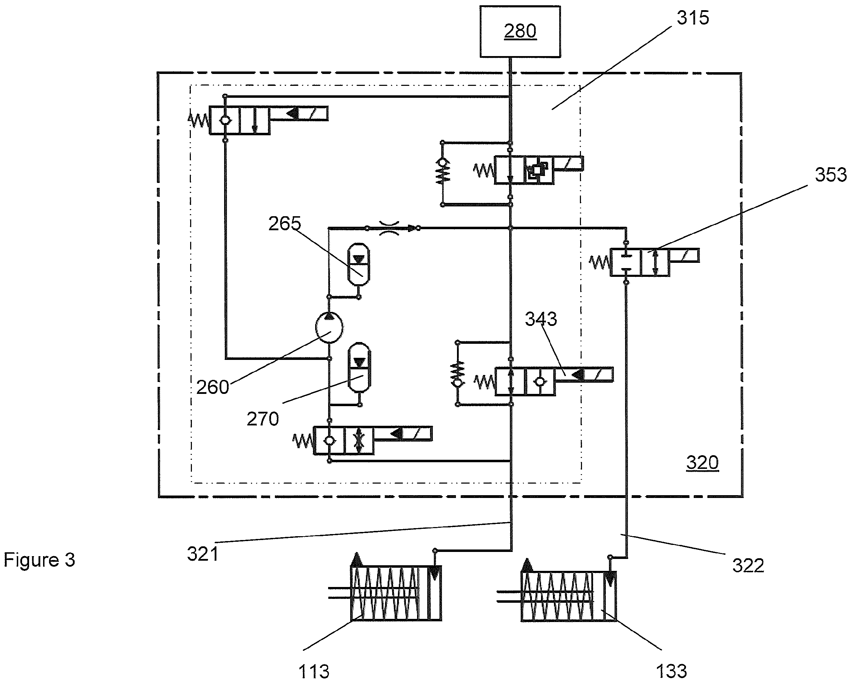

In a further embodiment of a system according to the invention, the toe actuator is connected to the ABS unit via a dedicated hydraulic line. An example of the further embodiment is depicted in Figure 3. The system is suitable for active toe angle adjustment of a rear vehicle wheel, as described with reference to Figure 2.

The system comprises an ABS unit 320 having a pump 260, a pressure accumulator 265 and a pressure damper 270 which are connected in a brake circuit 315 for delivering hydraulic pressure to a brake actuator 113 and a toe actuator 133. The brake circuit 315 is connected to a master cylinder and master cylinder reservoir 280. The brake actuator 113 is connected to the brake circuit 315 of the ABS unit 320 via a first hydraulic line 321, whereby the brake circuit comprises a first valve 343 arranged between the pump 260 and the first hydraulic line. The toe actuator is connected to the brake circuit 315 of the ABS unit 320 via a second hydraulic line 322. In this example, the ABS unit comprises a second valve 353 arranged in the second hydraulic line 322 between the toe actuator 133 and the pump 260. The second valve 353 may be a solenoid operated two-way, normally closed valve. The first valve 343 may be a solenoid operated two-way, normally open valve.

During normal (pedal operated) braking, neither of the first and second valves 343, 353 is energized. If toe angle needs to be changed, the first valve 343 is energized (closed) and the pump 260 is activated. When the pressure in the accumulator 265 is high enough, the second valve 353 is energized (opened) and the toe actuator 133 is operated. If the braking function is then required, the second valve 353 is de-energized (closed), which maintains the pressure and maintains toe angle position.

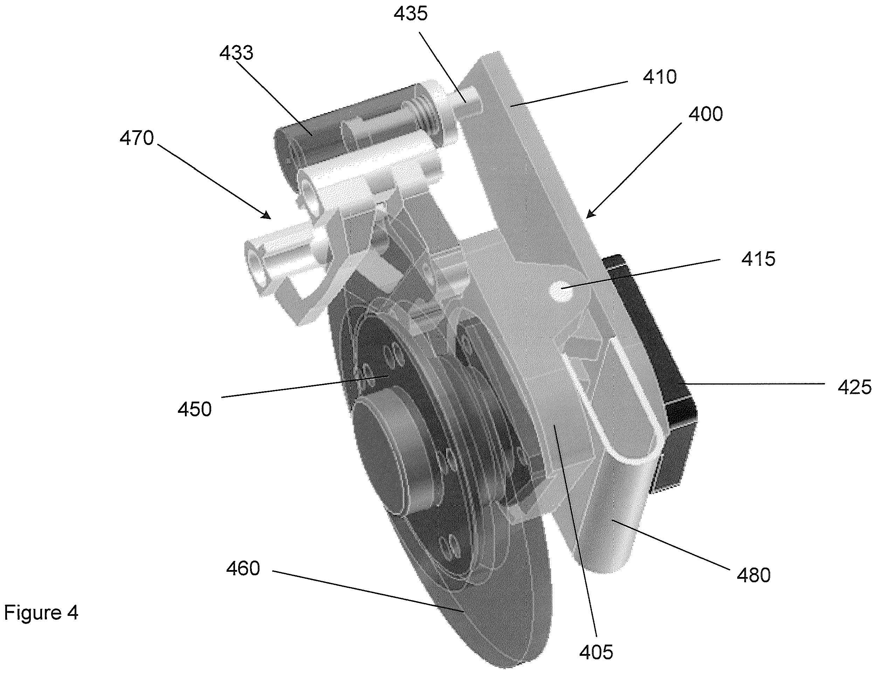

In order to adjust toe angle, the vehicle wheel needs to be rotatable about a vertical axis. This can be executed in a variety of ways. A preferred example of a device for active toe angle adjustment in a system according to the invention, for a vehicle with a twist beam rear suspension, is shown in a perspective view in Figure 4.

The device comprises a wheel carrier 400, part of which is rotatable about a vertical axis. The rotatable part is a mounting plate 405, to which the wheel bearing 450, including the brake disk 460 and vehicle wheel (not shown) are mounted. A brake calliper (hydraulic brake actuator) is also mounted to the rotatable mounting plate 405. The brake calliper is indicated with reference numeral 470, although only the mounting bracket is depicted, so as not to obscure the drawing. The brake calliper 470 thus always remains in alignment with the brake disk 460 when the mounting plate 405 is rotated in order to adjust toe angle. The wheel carrier 400 further comprises a reaction plate 410, being a fixed part, which is mountable to a twist beam flange 425 of the twist beam suspension. The mounting plate 405 of the wheel carrier is connected to the reaction plate 410 via a hinge 415, to enable rotation about the vertical axis.

The device further comprises a hydraulic toe actuator 433, which in this example is mounted to the brake calliper 470. The toe actuator may also be integrated within the brake calliper for optimal compactness. To change the toe angle of the vehicle wheel, a piston 435 of the hydraulic actuator is extended. This piston is in contact with the fixed reaction plate 410, meaning that extension of the piston 435 causes the mounting plate 405 to rotate about the hinge 415. To ensure that retraction of the piston 435 causes the mounting plate 405 to return to its original position, a spring 480 is provided between the mounting plate 415 and the reaction plate 410, at a side of the wheel carrier 400 opposite from the toe actuator 433. The spring 480 therefore ensures that the mounting plate 410 has a default position corresponding to a default toe angle of the wheel. The default toe angle may be a toe-out angle or a toe-in angle of e.g. approximately 1.0 degrees.

The device of Figure 4 is a compact device which may be retrofitted to e.g. a trailing arm of the twist beam suspension. However, the invention is not restricted to the active adjustment of toe angle of rear wheels on vehicles with a twist-beam suspension. A vehicle system according to the invention may also be used on vehicles with a multilink suspension and may be adapted for active adjustment of toe angle and/or camber angle.

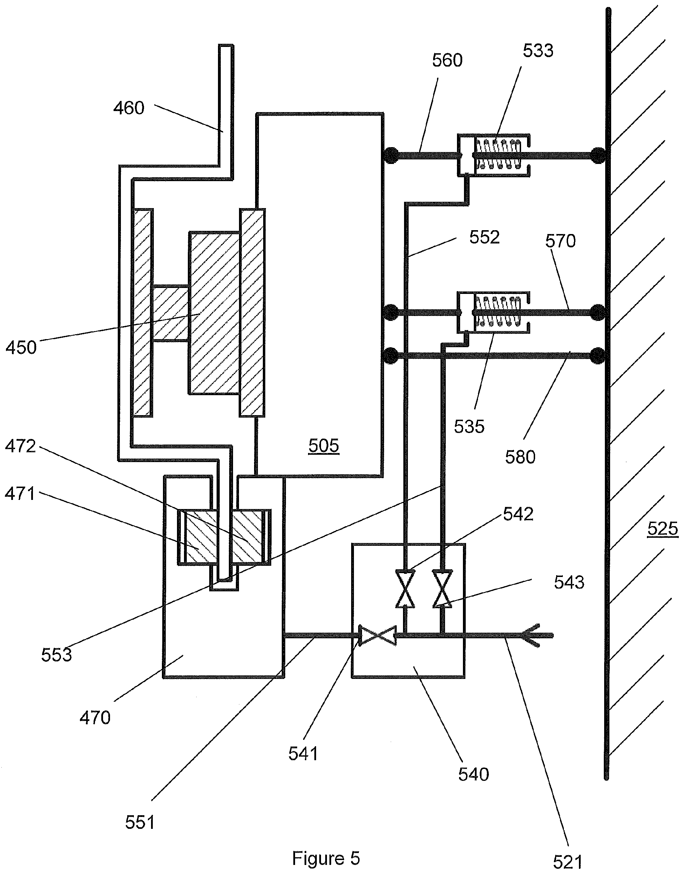

An example of a wheel angle adjustment device for a vehicle wheel having a multilink suspension is shown in Figure 5. The device is shown in a top view and is adapted for use in a system according to the invention.

The wheel angle adjustment device comprises a knuckle 505, to which a wheel bearing 450, and a brake calliper 470 are mounted. A brake disk 460 and the vehicle wheel (not shown) are mounted to the wheel bearing 450. The brake calliper 470 is hydraulically actuated, causing brake pads of the brake calliper to close around the brake disk 460. The knuckle 505 is mounted to the vehicle chassis 525 via a multilink suspension comprising a toe link 560, a top link 570 and a bottom link 580. A second hydraulic actuator (toe actuator) 533 is arranged in the toe link 560. Activation of the toe actuator 533 increases the length of the toe link, which changes the orientation of the knuckle 505 such that the toe angle of the vehicle wheel is adjusted. A third hydraulic actuator (camber actuator) 535 is arranged in the top link 570. Activation of the camber actuator 535 increases the length of the top link, which changes the orientation of the knuckle 505 such that the camber angle of the vehicle wheel is adjusted.

The adjustment device further comprises a valve block 540, which is connected to an ABS unit (not shown) via a main hydraulic line 521. The brake actuator is connected to the valve block 540 via a first hydraulic branch 551; the toe actuator 533 is connected to the valve block via a second hydraulic branch 552 and the camber actuator 535 is connected to the valve block via a third hydraulic branch 553. In this example, the valve block 540 comprises: a first valve 541, a second valve 542 and a third valve 543 which are respectively arranged in the first, second and third hydraulic branches. Suitably, the first hydraulic valve 541 is a normally open valve and the second and third valves are normally closed valves. Various valve configurations are possible for enabling hydraulic pressure to be delivered via the main hydraulic line to the actuators of the inventive vehicle system.

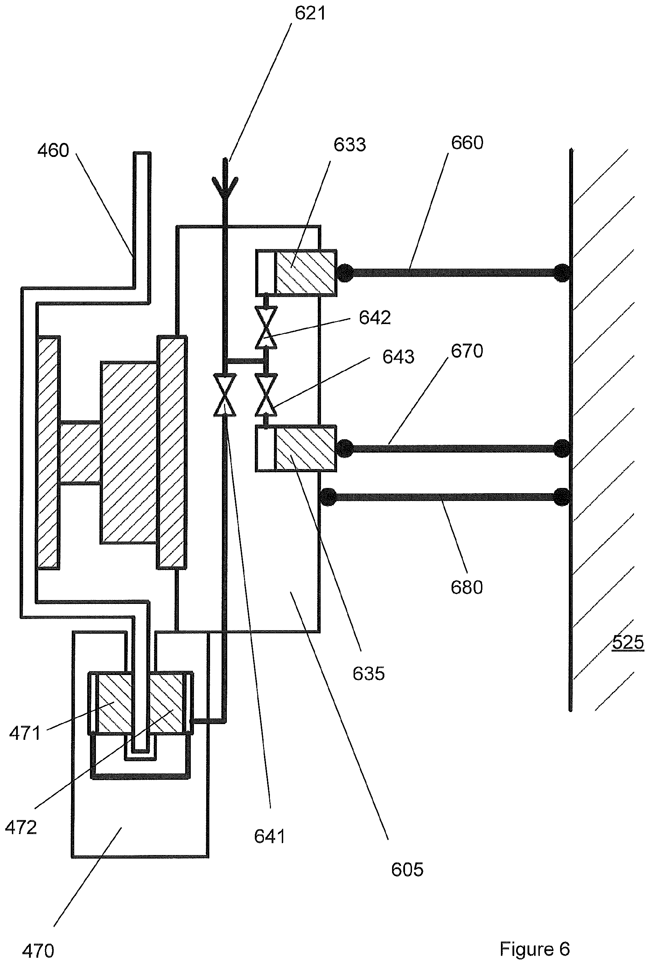

Figure 6 shows a further example of a wheel angle adjustment device for use in a system according to the invention on a vehicle with a multilink rear suspension. The multilink suspension again comprises a top link 670, a bottom link 680 and a toe link 660 which connect the knuckle 605 to the vehicle chassis 525. The brake calliper 470 is mounted to the knuckle and functions as a hydraulic brake actuator for closing brake pads 471, 472 around the brake disk 460 that is in connection with the vehicle wheel. In this example, a toe actuator 633 is integrated within the knuckle 605 and the toe link 660 is coupled to the knuckle via the toe actuator. Similarly, a camber actuator 635 is integrated in the knuckle 605 and the top link 670 in coupled to the knuckle via the camber actuator. Further, the valves for controlling the delivery of hydraulic pressure to the brake actuator and the toe and camber actuators are integrated within the knuckle 605. Again, all three actuators receive hydraulic pressure via one main hydraulic line 621 that is connected to the ABS unit. It is also possible for each actuator to be connected to the ABS unit via a dedicated hydraulic actuator.

In the depicted example, a first valve 641 is arranged between the brake actuator and the main hydraulic line 621; a second valve 642 is arranged between the toe actuator 633 and the main hydraulic line 621 and a third valve 643 is arranged between the camber actuator 635 and the main hydraulic line 621.

It is also possible for the toe actuator and the camber actuator to be mounted to or integrated in the vehicle chassis, such that the toe link of the multilink suspension connects the knuckle to the chassis via the toe actuator and the top link connects the knuckle to the chassis via the camber actuator. The associated valves for controlling the delivery of hydraulic pressure to the brake actuator and to the camber and toe actuators are suitably incorporated within a valve block that may be mounted to the chassis.

Thus a system according to the invention may be adapted in a variety of ways to suit a variety of different vehicle suspension designs.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

## Claims

1. A vehicle system comprising:
▪ an antilock braking system comprising a first hydraulic actuator (113, 114, 470), actuation of which brakes a wheel of the vehicle, and an ABS unit (120, 320) having a pump (260), an electronic controller and a brake circuit (215, 315) for delivering hydraulic pressure to the first hydraulic actuator; and
▪ a second hydraulic actuator (133, 134, 433, 533, 535, 633, 635) which is adapted to act on a moveable wheel carrier (400, 505, 605) of the vehicle wheel, so as to actively adjust an alignment angle of the vehicle wheel,
**characterized in that**
the ABS unit (120, 320) is configured to deliver hydraulic pressure also to the second hydraulic actuator.

2. The vehicle system of claim 1, wherein the second hydraulic actuator (133, 134, 433, 533, 535, 633, 635) is connected to the brake circuit (215, 315),

3. The vehicle system of claim 2, further comprising valve means (143, 144, 153, 154, 243, 253, 343, 353, 541, 542, 543, 641, 642, 643) for enabling hydraulic pressure to be delivered selectively to one of the first and second hydraulic actuators and, optionally, to both of the first and second hydraulic actuators simultaneously.

4. The vehicle system of claim 2 or 3, wherein the first and second hydraulic actuators are connected to the brake circuit (215, 315) of the ABS unit via a single hydraulic line (123, 124, 521, 621), the single hydraulic line comprising a first branch (221, 551) in connection with the first hydraulic actuator and comprising a second branch (222, 552, 553) in connection with the second hydraulic actuator.

5. The vehicle system of claim 4, wherein the valve means comprises at least a first valve (143, 144, 243, 541, 641) arranged between the first hydraulic actuator (113, 114, 470) and the single hydraulic line (123, 124, 521, 621), whereby the first valve is a normally-open valve.

6. The vehicle system of claim 4 or 5 wherein the valve means comprises a second valve (153, 154, 253, 542, 543) arranged between the second hydraulic actuator (133, 134, 433, 533, 535, 633, 635) and the single hydraulic line (123, 124, 521, 621), whereby the second valve is a normally closed valve.

7. The vehicle system of claim 2 or 3, wherein the first hydraulic actuator (113) is connected to the brake circuit (315) of the ABS unit (320) via a first hydraulic line (321) and the second hydraulic actuator (133) is connected to the brake circuit via a second hydraulic line (322).

8. The vehicle system of claim 7, wherein the ABS unit (320) comprises a normally closed valve (353) arranged between the second hydraulic line (322) and the pump (260).

9. The vehicle system of any of claims 2 to 8, wherein the system is configured to enable metered delivery of hydraulic pressure to the second hydraulic actuator, (133, 134, 433, 533, 535, 633, 635).

10. The vehicle system of any of claims 2 to 9, wherein the electronic controller of the ABS unit is configured to:
▪ receive one or more measured vehicle parameters and a wheel alignment angle signal;
▪ determine a desired alignment angle of the vehicle wheel on the basis of the one or more measured parameters;
▪ compare the desired alignment angle with a current alignment angle; and
▪ cause hydraulic pressure to be delivered to, or relieved from, the second hydraulic actuator when there is a difference between the current and the desired wheel alignment angle.

11. The vehicle system of claim 10 , wherein the ABS unit (120, 320) is equipped with Electronic Stability Control (ESC) functionality and wherein the one or more measured vehicle parameters include at least one of:
steering wheel angle; yaw rate; wheel speed; vehicle acceleration.

12. A vehicle comprising a system according to any one of claims 2 to 11.

13. The vehicle of claim 12, comprising a twist beam rear suspension, further comprising a wheel carrier (400) having a fixed part (410) that is mounted to a trailing arm of the twist beam suspension, and having a rotatable part (405) to which a wheel bearing (450), a brake disk (460) and the vehicle wheel are mounted, the rotatable part being rotational about a vertical axis, wherein:
▪ the first hydraulic actuator is a brake calliper (470) mounted to the rotatable part (405) of the wheel carrier; and
▪ the second hydraulic actuator (433) comprises a piston (435) that engages with a reaction plate of the fixed part (410) of the wheel carrier, such that extension of the piston causes a rotation of the wheel carrier which adjusts a toe angle of the vehicle wheel.

14. The vehicle of claim 13, wherein a spring (480) is provided between the fixed part (410) and the rotatable part (405) of the wheel carrier.

15. The vehicle of claim 13 or 14, wherein the second hydraulic actuator (433) is mounted to or integrated in the brake calliper (470).

16. The vehicle of claim 12, comprising a knuckle (505, 605) that is mounted to a chassis (525) of the vehicle via a multilink suspension comprising a top link (570, 670), a bottom link (580, 680) and a toe link, (560, 660) wherein:
▪ the first hydraulic actuator is a brake calliper (470) mounted to the knuckle; and
▪ the second hydraulic actuator (533, 633) is coupled to one of the top link and the toe link, whereby actuation of the second hydraulic actuator changes an effective length of said link, which actively adjusts an alignment angle of the wheel carrier (505, 605) and a vehicle wheel mounted thereto.

## Patentansprüche

1. Fahrzeugsystem, umfassend:
- ein Antiblockiersystem, das einen ersten hydraulischen Aktuator (113, 114, 470), dessen Betätigung ein Rad des Fahrzeugs bremst, und eine ABS-Einheit (120, 320) mit einer Pumpe (260), einer elektronischen Steuerung und einem Bremskreis (215, 315) zum Abgeben von Hydraulikdruck an den ersten hydraulischen Aktuator umfasst; und
- einen zweiten hydraulischen Aktuator (133, 134, 433, 533, 535, 633, 635), der dazu ausgeführt ist, dahingehend auf einen beweglichen Radträger (400, 505, 605) des Fahrzeugrads einzuwirken, einen Ausrichtwinkel des Fahrzeugrads aktiv einzustellen,
**dadurch gekennzeichnet, dass**
die ABS-Einheit (120, 320) dazu konfiguriert ist, Hydraulikdruck auch an den zweiten hydraulischen Aktuator abzugeben.

2. Fahrzeugsystem nach Anspruch 1, wobei der zweite hydraulische Aktuator (133, 134, 433, 533, 535, 633, 635) mit dem Bremskreis (215, 315) verbunden ist.

3. Fahrzeugsystem nach Anspruch 2, ferner umfassend ein Ventilmittel (143, 144, 153, 154, 243, 253, 343 353, 541, 542, 543, 641, 642, 643) zum Ermöglichen der selektiven Abgabe von Hydraulikdruck an den ersten oder den zweiten hydraulischen Aktuator und wahlweise gleichzeitig sowohl an den ersten als auch an den zweiten hydraulischen Aktuator.

4. Fahrzeugsystem nach Anspruch 2 oder 3, wobei der erste und der zweite hydraulische Aktuator über eine einzige Hydraulikleitung (123, 124, 521, 621) mit dem Bremskreis (215, 315) der ABS-Einheit verbunden sind, wobei die einzige Hydraulikleitung einen ersten Zweig (221, 551), der mit dem ersten hydraulischen Aktuator in Verbindung steht, umfasst und einen zweiten Zweig (222, 552, 553), der mit dem zweiten hydraulischen Aktuator in Verbindung steht, umfasst.

5. Fahrzeugsystem nach Anspruch 4, wobei das Ventilmittel mindestens ein erstes Ventil (143, 144, 243, 541, 641) umfasst, das zwischen dem ersten hydraulischen Aktuator (113, 114, 470) und der einzigen Hydraulikleitung (123, 124, 521, 621) angeordnet ist, wobei das erste Ventil ein normalerweise geöffnetes Ventil ist.

6. Fahrzeugsystem nach Anspruch 4 oder 5, wobei das Ventilmittel ein zweites Ventil (153, 154, 253, 542, 543) umfasst, das zwischen dem zweiten hydraulischen Aktuator (133, 134, 433, 533, 535, 633, 635) und der einzigen Hydraulikleitung (123, 124, 521, 621) angeordnet ist, wobei das zweite Ventil ein normalerweise geschlossenes Ventil ist.

7. Fahrzeugsystem nach Anspruch 2 oder 3, wobei der erste hydraulische Aktuator (113) über eine erste Hydraulikleitung (321) mit dem Bremskreis (315) der ABS-Einheit (320) verbunden ist und der zweite hydraulische Aktuator (133) über eine zweite Hydraulikleitung (322) mit dem Bremskreis verbunden ist.

8. Fahrzeugsystem nach Anspruch 7, wobei die ABS-Einheit (320) ein normalerweise geschlossenes Ventil (353) umfasst, das zwischen der zweiten Hydraulikleitung (322) und der Pumpe (260) angeordnet ist.

9. Fahrzeugsystem nach einem der Ansprüche 2 bis 8, wobei das System dazu konfiguriert ist, eine dosierte Abgabe von Hydraulikdruck an den zweiten hydraulischen Aktuator (133, 134, 433, 533, 535, 633, 635) zu ermöglichen.

10. Fahrzeugsystem nach einem der Ansprüche 2 bis 9, wobei die elektronische Steuerung der ABS-Einheit dazu konfiguriert ist:
- einen oder mehrere gemessene Fahrzeugparameter und ein Radausrichtwinkelsignal zu empfangen;
- einen Soll-Ausrichtwinkel des Fahrzeugrads basierend auf dem einen oder den mehreren gemessenen Parametern zu bestimmen;
- den Soll-Ausrichtwinkel mit einem Ist-Ausrichtwinkel zu vergleichen; und
- zu bewirken, dass Hydraulikdruck an den zweiten hydraulischen Aktuator abgegeben oder davon abgeführt wird, wenn zwischen dem Ist- und dem Soll-Radausrichtwinkel eine Differenz besteht.

11. Fahrzeugsystem nach Anspruch 10, wobei die ABS-Einheit (120, 320) mit einer Fahrdynamikregelungs-(ESC-)Funktionalität ausgestattet ist und wobei der eine oder die mehreren gemessenen Fahrzeugparameter den Lenkradwinkel und/oder die Gierrate und/oder die Raddrehzahl und/oder die Fahrzeugbeschleunigung umfasst/umfassen.

12. Fahrzeug, das ein System nach einem der Ansprüche 2 bis 11 umfasst.

13. Fahrzeug nach Anspruch 12, das eine Verbundlenker-Hinterachse umfasst, ferner umfassend einen Radträger (400) mit einem feststehenden Teil (410), das an einem Längslenker der Verbundlenkerachse angebracht ist, und einem drehbaren Teil (405), an dem ein Radlager (450), eine Bremsscheibe (460) und das Fahrzeugrad angebracht sind, wobei das drehbare Teil um eine vertikale Achse drehbar ist, wobei:
- der erste hydraulische Aktuator ein Bremssattel (470) ist, der an dem drehbaren Teil (405) des Radträgers angebracht ist; und
- der zweite hydraulische Aktuator (433) einen Kolben (435) umfasst, der mit einer Reaktionsscheibe am feststehenden Teil (410) des Radträgers in Eingriff gelangt, so dass ein Ausfahren des Kolbens eine Drehung des Radträgers bewirkt, wodurch ein Spurwinkel des Fahrzeugrads eingestellt wird.

14. Fahrzeug nach Anspruch 13, wobei eine Feder (480) zwischen dem feststehenden Teil (410) und dem drehbaren Teil (405) des Radträgers vorgesehen ist.

15. Fahrzeug nach Anspruch 13 oder 14, wobei der zweite hydraulische Aktuator (433) an dem Bremssattel (470) angebracht oder darin integriert ist.

16. Fahrzeug nach Anspruch 12, das einen Achsschenkel (505, 605) umfasst, der über eine Mehrlenker-Aufhängung, die einen Oberlenker (570, 670), einen Unterlenker (580, 680) und einen Spurlenker (560, 660) umfasst, an einem Chassis (525) des Fahrzeugs angebracht ist, wobei:
- der erste hydraulische Aktuator ein am Achsschenkel angebrachter Bremssattel (470) ist; und
- der zweite hydraulische Aktuator (533, 633) an den Oberlenker oder den Spurlenker gekoppelt ist, wobei eine Betätigung des zweiten hydraulischen Aktuators eine effektive Länge des Lenkers ändert, wodurch ein Ausrichtwinkel des Radträgers (505, 605) und eines daran angebrachten Fahrzeugrads aktiv eingestellt wird.

## Revendications

1. Système de véhicule comprenant :
- un système de freinage à antiblocage comprenant un premier actionneur hydraulique (113, 114, 470), dont l'actionnement freine une roue du véhicule, et une unité d'ABS (120, 320) ayant une pompe (260), un dispositif de commande électronique et un circuit de freinage (215, 315) pour distribuer de la pression hydraulique au premier actionneur hydraulique ; et
- un deuxième actionneur hydraulique (133, 134, 433, 533, 535, 633, 635) qui est prévu pour agir sur un support de roue mobile (400, 505, 605) de la roue du véhicule, de manière à ajuster activement un angle d'alignement de la roue du véhicule,
**caractérisé en ce que**
l'unité d'ABS (120, 320) est configurée pour distribuer de la pression hydraulique également au deuxième actionneur hydraulique.

2. Système de véhicule selon la revendication 1, dans lequel le deuxième actionneur hydraulique (133, 134, 433, 533, 535, 633, 635) est connecté au circuit de freinage (215, 315).

3. Système de véhicule selon la revendication 2, comprenant en outre un moyen de soupape (143, 144, 153, 154, 243, 253, 343, 353, 541, 542, 543, 641, 642, 643) pour permettre de distribuer la pression hydraulique de manière sélective à l'un du premier et du deuxième actionneur hydraulique et, en option, à la fois au premier et au deuxième actionneur hydraulique simultanément.

4. Système de véhicule selon la revendication 2 ou 3, dans lequel le premier et le deuxième actionneur hydraulique sont connectés au circuit de freinage (215, 315) de l'unité d'ABS par le biais d'une conduite hydraulique unique (123, 124, 521, 621), la conduite hydraulique unique comprenant une première branche (221, 551) en liaison avec le premier actionneur hydraulique et comprenant une deuxième branche (222, 552, 553) en liaison avec le deuxième actionneur hydraulique.

5. Système de véhicule selon la revendication 4, dans lequel le moyen de soupape comprend au moins une première soupape (143, 144, 243, 541, 641) disposée entre le premier actionneur hydraulique (113, 114, 470), et la conduite hydraulique unique (123, 124, 521, 621), la première soupape étant une soupape normalement ouverte.

6. Système de véhicule selon la revendication 4 ou 5, dans lequel le moyen de soupape comprend une deuxième soupape (153, 154, 253, 542, 543) disposée entre le deuxième actionneur hydraulique (133, 134, 433, 533, 535, 633, 635) et la conduite hydraulique unique (123, 124, 521, 621), la deuxième soupape étant une soupape normalement fermée.

7. Système de véhicule selon la revendication 2 ou 3, dans lequel le premier actionneur hydraulique (113) est connecté au circuit de freinage (315) de l'unité d'ABS (320) par le biais d'une première conduite hydraulique (321) et le deuxième actionneur hydraulique (133) est connecté au circuit de freinage par le biais d'une deuxième conduite hydraulique (322).

8. Système de véhicule selon la revendication 7, dans lequel l'unité d'ABS (320) comprend une soupape normalement fermée (353) disposée entre la deuxième conduite hydraulique (322) et la pompe (260).

9. Système de véhicule selon l'une quelconque des revendications 2 à 8, dans lequel le système est configuré pour permettre la distribution dosée de pression hydraulique au deuxième actionneur hydraulique (133, 134, 433, 533, 535, 633, 635).

10. Système de véhicule selon l'une quelconque des revendications 2 à 9, dans lequel le dispositif de commande électronique de l'unité d'ABS est configuré pour :
- recevoir un ou plusieurs paramètres de véhicule mesurés et un signal d'angle d'alignement de roue ;
- déterminer un angle d'alignement souhaité de la roue du véhicule sur la base du ou des paramètres mesurés ;
- comparer l'angle d'alignement souhaité avec un angle d'alignement actuel ; et
- provoquer la distribution de pression hydraulique au deuxième actionneur hydraulique ou la détente de pression hydraulique de celui-ci lorsqu'il existe une différence entre l'angle d'alignement de roue actuel et l'angle d'alignement de roue souhaité.

11. Système de véhicule selon la revendication 10, dans lequel l'unité d'ABS (120, 320) est équipée d'une fonctionnalité de commande de stabilité électronique (ESC) et dans lequel le ou les paramètres de véhicule mesurés comportent au moins l'un parmi : l'angle de roue de direction ; la vitesse de lacet ; la vitesse de roue ; l'accélération du véhicule.

12. Véhicule comprenant un système selon l'une quelconque des revendications 2 à 11.

13. Véhicule selon la revendication 12, comprenant une suspension arrière à poutre de flexion, comprenant en outre un support de roue (400) ayant une partie fixe (410) qui est montée sur un bras arrière de la suspension à poutre de flexion, et ayant une partie rotative (405) sur laquelle sont montés un palier de roue (450), un disque de frein (460) et la roue du véhicule, la partie rotative pouvant tourner autour d'un axe vertical,
- le premier actionneur hydraulique étant un étrier de frein (470) monté sur la partie rotative (405) du support de roue ; et
- le deuxième actionneur hydraulique (433) comprenant un piston (435) qui s'engage avec une plaque de réaction de la partie fixe (410) du support de roue, de telle sorte que l'extension du piston provoque une rotation du support de roue qui ajuste un angle de parallélisme de la roue du véhicule.

14. Véhicule selon la revendication 13, dans lequel un ressort (480) est prévu entre la partie fixe (410) et la partie rotative (405) du support de roue.

15. Véhicule selon la revendication 13 ou 14, dans lequel le deuxième actionneur hydraulique (433) est monté sur ou intégré dans l'étrier de frein (470).

16. Véhicule selon la revendication 12, comprenant une articulation (505, 605) qui est montée sur un châssis (525) du véhicule par le biais d'une suspension multibras comprenant un bras supérieur (570, 670), un bras inférieur (580, 680), et un bras de liaison (560, 660),
- le premier actionneur hydraulique étant un étrier de frein (470) monté sur l'articulation ; et
- le deuxième actionneur hydraulique (533, 633) étant accouplé à l'un du bras supérieur et du bras de liaison, l'actionnement du deuxième actionneur hydraulique modifiant une longueur effective dudit bras, qui ajuste activement un angle d'alignement du support de roue (505, 605) et d'une roue du véhicule montée sur celui-ci.
